# EUROPÄISCHE PATENTANMELDUNG

(11) **EP 0 902 265 A1**
(43) Veröffentlichungstag der Anmeldung: **17.03.1999**
(21) Anmeldenummer: 98115870.2
(22) Anmeldetag: 22.08.1998
(51) Int. Cl.: G01K 13/08

(54) **Temperatur-Überwachungsanordnung**

(30) Priorität: 10.09.1997 DE 19739587
(71) Anmelder: Pfeiffer Vacuum GmbH, 35614 Asslar (DE)
(72) Erfinder: Conrad,Armin, 35745 Herborn-Hörbach (DE)

(57) **Zusammenfassung**

In der Anordnung zur berührungslosen Temperaturmessung an einem Rotor (1) befindet sich auf der Statorseite ein durch Wechselstrom gespeister Primärkreis (3) und dem gegenüber auf dem Rotor ein Sekundärkreis, welcher einen temperaturabhängigen Widerstand (10) enthält. Bei Temperaturänderung des Rotors wird die Änderung des temperaturabhängigen Widerstandes transformatorisch auf den Primärkreis übertragen. Eine dadurch erzeugte Spannungsänderung kann zur Steuerung der Rotordrehzahl und anderer Größen verwendet werden. Die Wicklung des Primärkreises auf dem Stator kann mit den Wicklungen eines Magnetlagers eine Baueinheit bilden, wobei ein Eisenkern (12) für beide Magnetsysteme gemeinsam genutzt werden kann.

## Beschreibung

Die Erfindung betrifft eine Anordnung zur berührungslosen Überwachung von Temperaturen an Rotoren.

Die Überwachung von Temperaturen an sich bewegenden Objekten ist eine weitverbreitete Aufgabenstellung in der Technik. Wenn es sich bei den Objekten um Rotoren handelt, welche mit sehr hoher Drehzahl umlaufen, kommen nur berührungslose Meßmethoden in Frage. Zusätzliche Randbedingungen schränken die Anwendbarkeit bekannter Meß- und Überwachungsmethoden weiter ein. Eine solche zusätzliche Randbedingung kann z. B. der Betrieb unter Vakuum sein. Stellvertretend für viele Anwendungsfälle seien hier schnell rotierende mechanische Vakuumpumpen (z. B. Turbomolekurlarpumpen) und Zentrifugen genannt. Die Bedeutung der Temperaturmessung und -überwachung wird besonders am Beispiel der Turbomolekurpumpe deutlich. Für einen wirkungsvollen Einsatz einer solchen Pumpe ist ein hoher Gasdurchsatz erforderlich. Dieser ist mit einer hohen elektrischen Leistungsaufnahme des Antriebssystems verbunden, was wiederum eine Temperaturerhöhung des Rotors mit sich bringt. Hierbei dürfen jedoch thermische Grenzen, welche z. B. durch die Eigenschaften des Rotormaterials oder durch die engen Toleranzen der Abstände von Rotor- und Statorbauteilen gegeben sind, nicht überschritten werden. Um optimale Pumpeigenschaften (hoher Gasdurchsatz und hohes Kompressionsverhältnis) zu erreichen und dabei einen sicheren Betrieb der Pumpe zu gewährleisten, ist eine exakte und reproduzierbare Überwachung der Rotortemperatur notwendig.

Durch umfangreiche Tests und Berechnungen kann zwar der Temperaturverlauf in großen Linien im voraus festgelegt werden, es ist jedoch nicht möglich, alle Parameter zu beachten, insbesondere wenn die Betriebsbedingungen durch unterschiedliche Prozeßabläufe bestimmt werden. Zur optimalen Auslastung der Pumpe ist es daher wichtig, die Rotortemperatur in jedem Betriebszustand zu überwachen, um dann den Betrieb der Pumpe den momentanen Gegebenheiten anzupassen.

In vielen Bereichen der Technik werden zur kontaktlosen Temperaturmessung Pyrometer erfolgreich eingesetzt. Diese sind mit Sensoren ausgerüstet, welche die von einem Objekt ausgehende Strahlung als Maß für dessen Temperatur ermitteln. Die von den Sensoren empfangene Strahlung hängt außer von der Temperatur auch sehr stark von der Strahlungszahl ab, die ihrerseits von der Oberflächenbeschaffenheit des emittierenden Objektes abhängt. Da die Oberfläche des Pumpenrotors im Laufe der Zeit insbesondere beim Abpumpen von dampfförmigen Medien in der Vakuum- und Prozeßtechnik Wandlungen unterworfen ist, z. B. durch Kondensation, Ablagerung von festen Partikeln oder auch durch chemische Reaktionen, treten Verfälschungen der Temperaturmessungen auf. Außerdem erfordert die Abhängigkeit der Anzeige von der Umgebungs- und Gehäusetemperatur eine aufwendige Kompensationselektronik. Die zum Teil hohe Empfindlichkeit gegenüber energiereicher, ionisierter Strahlung beschränkt ihren Einsatzbereich.

In der DE-OS 43 09 018 wird eine Anordnung zur berührungslosen Temperaturmesseung an Rotoren beschrieben, bei der ferromagnetische Materialien eingesetzt werden. Die Schwierigkeit beim serienmäßigen Einsatz einer solchen Anordnung liegt in der Beschaffung von ferromagnetischen Materialien mit reproduzierbarer Curie-Temperatur.

Der Erfindung liegt die Aufgabe zugrunde eine Einrichtung zur berührungslosen Erfassung von Temperaturen an Rotoren vorzustellen, welche mit einfachen Mitteln exakte und reproduzierbare Ergebnisse liefert und die oben beschriebenen Nachteile vermeidet.

Die Aufgabe wird durch die kennzeichnenden Merkmale des ersten Patentanspruches gelöst. Die Ansprüche 2 bis 5 stellen weitere Ausgestaltungsformen der Erfindung dar.

Die erfindungsgemäße Anordnung nach Anspruch 1 ermöglicht die berührungslose Erfassung von Temperaturen an rotierenden Körpern gemäß der Aufgabenstellung. Die Anordnung kann nach Anspruch 2 vereinfacht werden, wenn die gesamte Wicklung im zweiten Stromkreis im Rotor als temperaturabhängiger Widerstand ausgebildet wird. Im Grunde genügt dann eine einzige Wicklung als Sekundärstromkreis.

Für den Fall, daß der Rotor aktiv magnetisch gelagert ist, kann nach Anspruch 3 die Wicklung des ersten Stromkreises im Stator mit der Wicklung der Steuerspule des Magnetlagers in einer Baueinheit zusammengefaßt werden. Da die beiden Wicklungen senkrecht zueinander stehende Magnetfelder erzeugen, ist eine gegenseitige Beeinflußung ausgeschlossen. In diesem Fall kann ein Eisenkern gemeinsam für beide magnetische Kreise verwendet werden, wodurch eine rationellere und kompaktere Bauweise ermöglicht wird.

Die durch eine Temperaturänderung im Rotor erzeugte Signaländerung, welche transformatorisch auf den Primärstromkreis im Stator übertragen wird, kann nach Anspruch 5 zur Steuerung der Rotordrehzahl herangezogen werden. Z. B. kann bei Überschreitung einer vorge-gebenen Rotortemperatur die Drehzahl erniedrigt werden. Darüber hinaus können je nach Anwendungsfall weitere Größen durch die Rotortemperatur geregelt werden. Wenn es sich z. B. - wie eingangs erwähnt - um den Rotor einer Vakuumpumpe handelt und die Vakuumpumpe in einen Prozeß eingebunden ist, können der Prozeß oder Teile davon in Abhängigkeit von der Rotortemperatur gesteuert werden.

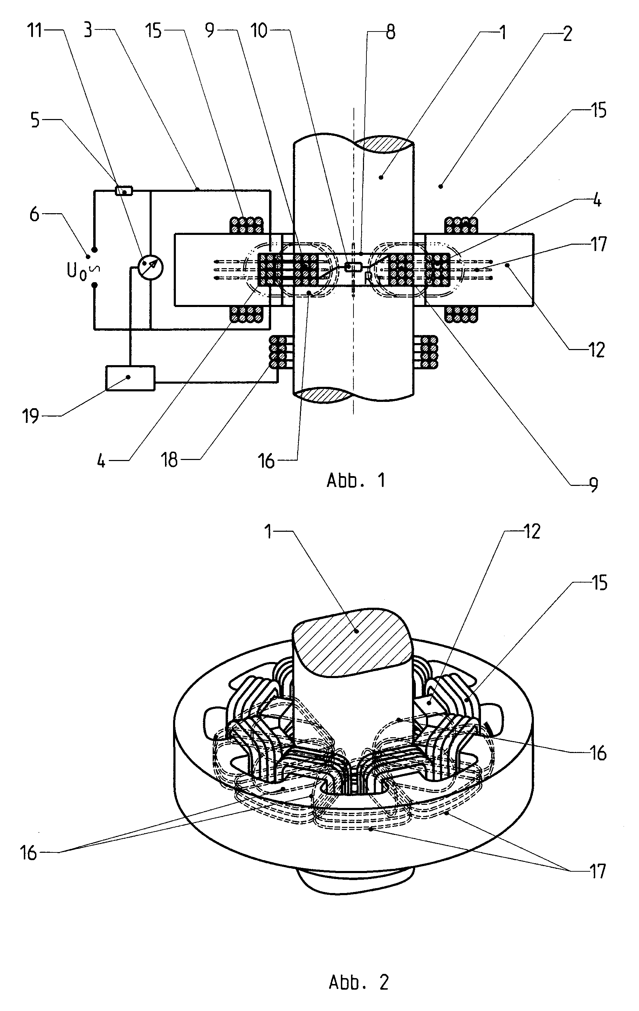

Anhand der Abbildungen 1 und 2 soll die Erfindung an einem Beispiel näher erläutert werden.

Abbildung 1 zeigt eine schematische Darstellung der erfindungsgemäßen Anordnung. Abbildung 2 zeigt in räumlicher Darstellung Rotor und Stator mit den verschiedenen Wicklungen und deren Magnetfeldlinien.

In Abbildung 1 ist der Rotor mit 1 und der Stator mit 2 bezeichnet. Ein erster Stromkreis 3 wird durch eine Wechselspannungsquelle 6 gespeist. Er besteht weiterhin aus einem Vorwiderstand 5 und einer Wicklung 4, welche im Stator 2 der Anordnung angebracht ist. Ein zweiter Stromkreis 8 ist im Rotor installiert. Er besteht aus einer Wicklung 9, welche der Wicklung 4 im Stator gegenübersteht und aus einem temperaturabhängigen Widerstand 10. Bei angelegter Wechselspannung induziert der erste Stromkreis 3 als Primärkreis über die Wicklung 4 eine Spannung und somit einen Strom in der Wicklung 9 des zweiten Stromkreises, welcher als Sekundärkreis anzusehen ist. Wenn durch eine Temperaturerhöhung im Rotor 1 der temperaturabhängige Widerstand 10 seinen Wert ändert, wird diese Änderung transformatorisch auf den Primärkreis übertragen. Eine Meßeinrichtung 11 kann dann die dadurch hervorgerufene Spannungsänderung an der Wicklung 4 registrieren. Diese Spannungsänderung kann als Signal einer Steuereinheit 19 zugeführt und über diese zur Regelung des Antriebsmotors 18 verwendet werden.

Die Wicklungen der Steuerspulen des aktiven Magnetlagers sind mit 15 bezeichnet. Diese Wicklungen bilden mit den Wicklungen 4 des ersten Stromkreises 3 eine Baueinheit. Der Eisenschluß für die beiden durch die Wicklungen 4 und 15 erzeugten Magnetfelder erfolgt durch einen gemeinsamen Eisenkern 12. In Abbildung 2 wird diese Baueinheit in räumlicher Darstellung gezeigt. Die Magnetfeldlinien 16 der Sensorwicklung 4 verlaufen senkrecht zu den Magnetfeldlinien 17 der Magnetlagerwicklung 15, so daß sie sich nicht gegenseitig beeinflußen.

## Patentansprüche

1. Anordnung zur berührungslosen Temperaturmessung an einem Rotor (1), welcher durch an sich bekannte Antriebs- und Lagerelemente in Zusammenwirkung mit einem Stator (2) betrieben wird, dadurch gekennzeichnet, daß im Stator die Wicklung (4) eines ersten Stromkreises (3), welcher durch eine Wechselspannungsquelle (6) gespeist wird, angeordnet ist und im Rotor ein zweiter Stromkreis (8) mit einer Wicklung (9), welche der Wicklung (4) im Stator gegenübersteht und einem temperaturabhängigen Widerstand (10) angeordnet ist, wobei der erste Stromkreis als Primärkreis und der zweite Stromkreis als Sekundärkreis eines Übertragers anzusehen sind und im Primärkreis eine Meßeinrichtung (11) vorhanden ist, die eine Änderung des temperaturabhängigen Widerstandes (10) im Sekundärkreis, welche transformatorisch auf den Primärkreis übertragen wird, als Spannungsänderung an der Wicklung (4) registriert.

2. Anordnung nach Anspruch 1, dadurch gekennzeichnet, daß die Wicklung (9) im zweiten Stromkreis als temperaturabhängiger Widerstand ausgebildet ist.

3. Anordnung nach Anspruch 1 oder 2, dadurch gekennzeichnet, daß mindestens ein Lagerelement ein aktives Magnetlager ist, wobei die Wicklung (15) der Steuerspule des Magnetlagers auf dem Stator (2) angebracht ist und mit der Wicklung (4) des ersten Stromkreises (3) eine Baueinheit bildet und die von den Wicklungen (4, 15) erzeugten Magnetfelder (16, 17) senkrecht zueinander verlaufen.

4. Anordnung nach Anspruch 3, dadurch gekennzeichnet, daß die durch die Wicklungen (4, 15) erzeugten Magnetfelder über einen gemeinsamen Eisenkern jeweils in sich geschlossene magnetische Kreise bilden, deren Magnetfeldlinien (16, 17) senkrecht zueinander verlaufen.

5. Anordnung nach einem der vorhergehenden Ansprüche, dadurch gekennzeichnet, daß zur Regelung der Drehzahl des Rotors (1) eine Steuereinheit (19) vorhanden ist, welche die Spannungsänderung in der Wicklung (4) des ersten Stromkreises (3) als Steuersignal für die Stromversorgung des Antriebsmotors (18) verwendet.
